# EUROPEAN PATENT APPLICATION

(11) **EP 3 026 965 A1**
(43) Date of publication of application: **01.06.2016**
(21) Application number: 14829074.5
(22) Date of filing: 08.07.2014
(51) Int. Cl.: H04W 56/00, H04W 16/32, H04W 52/02

(54) **WIRELESS BASE STATION, USER TERMINAL, WIRELESS COMMUNICATION METHOD**

(30) Priority: 24.07.2013 JP 2013153660
(71) Applicant: NTT DOCOMO, INC., Chiyoda-ku Tokyo 100-6150 (JP)
(72) Inventor: TAKEDA, Kazuki, Tokyo 100-6150 (JP); HARADA, Hiroki, Tokyo 100-6150 (JP); NAGATA, Satoshi, Tokyo 100-6150 (JP); YASUKAWA, Shimpei, Tokyo 100-6150 (JP)
(74) Representative: Hoffmann Eitle
(86) International application number: PCT/JP2014/068219
(87) International publication number: WO 2015/012103

(57) **Abstract**

The present invention is designed to acquire synchronization by a radio interface taking into account on/off control of small cells. A radio base station establishes radio synchronization by using a downlink signal transmitted from a radio base station of another cell, and has a synchronization information control section that, via an inter-base station interface, reports a synchronization information request to the radio base station of the other cell and also acquires synchronization information reported from the radio base station of the other cell, and an on/off control section that, based on the synchronization information acquired, determines the status of synchronization with a cell that belongs to a lower stratum than an own cell, and executes on/off control for the own cell, and the synchronization information which the synchronization information control section acquires from the radio base station of the other cell includes information representing the synchronization status and the synchronization stratum level of the radio base station of the other cell.

## Description

### Technical Field

The present invention relates to a radio base station, a user terminal and a radio communication method in a next-generation mobile communication system.

### Background Art

In a UMTS (Universal Mobile Telecommunications System) network, the specifications of long-term evolution (LTE) have been drafted for the purposes of further increasing high-speed data rates, providing low delay and so on (see non-patent literature 1). In LTE, as multiple access schemes, a scheme that is based on OFDMA (Orthogonal Frequency Division Multiple Access) is used in downlink channels (downlink), and a scheme that is based on SC-FDMA (Single-Carrier Frequency Division Multiple Access) is used in uplink channels (uplink).

Successor systems of LTE (referred to as, for example, "LTE-advanced" or "LTE enhancement" (hereinafter referred to as "LTE-A")) have been under study for the purpose of achieving further broadbandization and increased speed beyond LTE. In the LTE-A system, a HetNet (Heterogeneous Network), in which small cells (for example, pico cells, femto cells and so on), each having a local coverage area of a radius of approximately several tens of meters, are formed inside a macro cell having a wide coverage area of a radius of approximately several kilometers, is under study (see, for example, non-patent literature 2). In relationship to the HetNet, a study is also in progress to use carriers of different frequency bands, in addition to carriers of the same frequency band, between the macro cell and the small cells.

### Citation List

### Non-Patent Literature

Non-patent Literature 1: GPP TS 36.300 "Evolved UTRA and Evolved UTRAN Overall Description"
Non-patent Literature 2: GPP TR 36.814 "E-UTRA Further Advancements for E-UTRA Physical Layer Aspects"

### Summary of Invention

### Technical Problem

A HetNet is anticipated to place many small cells in a macro cell. In this case, it is preferable that timing is synchronized between the small cells.

As a method of timing synchronization between different cells (radio base stations), a synchronization method to detect timing based on downlink signals transmitted from other cells -- that is, synchronization by a radio interface -- is known. According to this synchronize method, a small cell (listener) to establish synchronization anew uses network listening to detect timing, where a macro cell that is synchronized with GPS and so on or a small cell that is synchronized with the macro cell is the source of synchronization (sounder).

Meanwhile, in the above HetNet, a study in progress to switch each small cell on and off in accordance with the fluctuations of traffic over time. However, if synchronization by means of a radio interface is used, the flexibility of turning on and off small cells is severely limited by the synchronize topology.

The present invention has been made in view of the above, and it is therefore an object of the present invention to provide a radio base station, a user terminal and a radio communication method that enable synchronization by means of a radio interface taking in account on/off control of small cells.

### Solution to Problem

A radio base station, according to the present invention, is a radio base station to establish radio synchronization by using a downlink signal transmitted from a radio base station of another cell, and have a synchronization information control section that, via an inter-base station interface, reports a synchronization information request to the radio base station of the other cell and also acquires synchronization information reported from the radio base station of the other cell, and an on/off control section that, based on the synchronization information acquired, determines the status of synchronization with a cell that belongs to a lower stratum than the own cell, and executes on/off control for the own cell, and the synchronization information which the synchronization information control section acquires from the radio base station of the other cell includes information representing a synchronization status and a synchronization stratum level of the radio base station of the other cell.

### Advantageous Effects of Invention

According to the present invention, it is possible to acquire synchronization by means of a radio interface taking into account on/off control of small cells.

### Brief Description of Drawings

FIG. 1 is a conceptual diagram of a HetNet;
FIG. 2 provides diagrams to explain examples of radio communication control where timing synchronization is established between different cells (radio base stations);
FIG. 3 provides diagrams to explain the stratum levels of mutually-synchronized radio base stations;
FIG. 4 is a sequence diagram to show an example of the operation of backhaul signaling to implement radio synchronization in conventional TDD HeNBs;
FIG. 5 is a diagram to explain MBSFN subframes in conventional TDD HeNBs;
FIG. 6A is a diagram to explain on/off switching of small cells, and FIG. 6B is a diagram to explain the relationship between a sounder and listeners;
FIG. 7 is a diagram to explain a stratum structure with deep strata;
FIG. 8 is a diagram to explain a situation where small cells of a lower stratum are synchronized with small cells of a higher stratum;
FIG. 9 is a diagram to show an example case where, according to a first aspect, small cells of a lower stratum report the small cells to be the target of synchronization to other small cells including small cells of a higher stratum;
FIG. 10 is a diagram to show an example case where, according to the first aspect, a small cell of a higher stratum, when turning off itself, reports to neighbor cells that the smell cell is going to turn off;
FIG. 11 is a diagram to show an example case where, according to a second aspect, a user terminal UE connected to a small cell reports information about nearby radio-synchronized cells to its connecting cell;
FIG. 12 is a schematic diagram to show an example of a radio communication system according to the present embodiment;
FIG. 13 is a diagram to explain an overall structure of a radio base station according to the present embodiment;
FIG. 14 is a diagram to explain a functional structure of a small base station according to the present embodiment;
FIG. 15 is a diagram to explain a functional structure of a macro base station according to the present embodiment;
FIG. 16 is a diagram to explain an overall structure of a user terminal according to the present embodiment; and
FIG. 17 is a diagram to explain a functional structure of a user terminal according to the present embodiment.

### Description of Embodiments

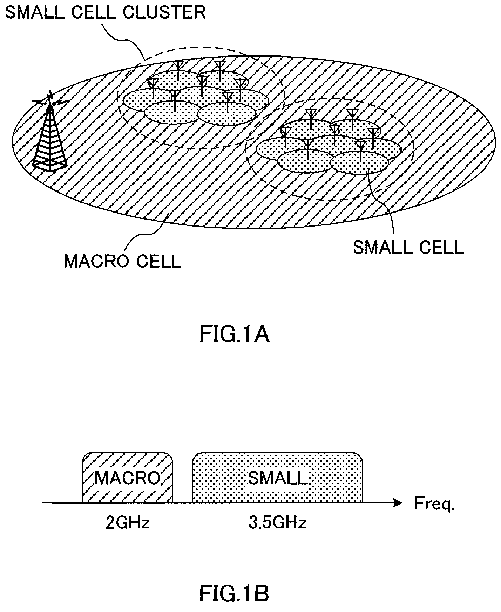

FIG. 1 is a conceptual diagram of a HetNet that is anticipated in Rel. 12 and later versions. As shown in FIG. 1A, a HetNet refers to a radio communication system in which macro cells and small cells are arranged to geographically overlap each other at least in part. A HetNet is comprised of a radio base station that forms a macro cell (hereinafter referred to as "macro base station"), radio base stations that form small cells (hereinafter referred to as "small base stations"), and user terminals that communicate with the macro base station and the small base stations.

Generally speaking, the distribution of users and traffic are not fixed, but change over time or between locations. Consequently, when many small cells are placed in a macro cell, the small cells may be placed in such a manner that their density and environment vary (sparse and dense) between locations, as shown in FIG. 1A. For example, it may be possible to raise the density of placing small cells (dense small cells) in train stations, shopping malls and so on where many user terminals gather, and lower the density of placing small cells (sparse small cells) in places where user terminals do not gather.

For example, by placing small cells densely and in a localized manner -- that is, in clusters -- in places where the traffic is heavy, it is possible to achieve an off-loading effect between the cells. Furthermore, since it is not necessary to cover the whole area (the macro cell's coverage area) with the small cells, it becomes possible to control the locations to place the small cells and the number of small cells, taking into account the cost and so on.

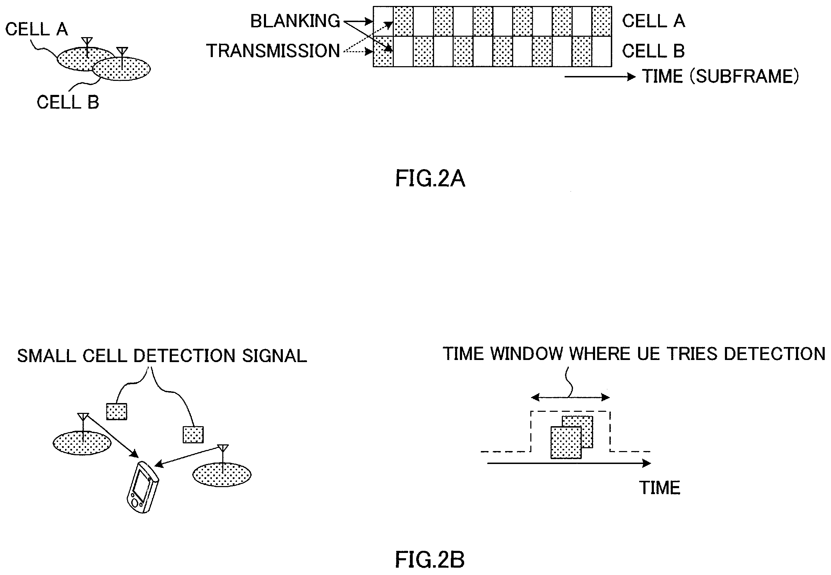

The HetNet shown in FIG. 1 illustrates a case where the macro cell uses a carrier of a relatively low frequency band such as 800 MHz and 2 GHz (in FIG. 1B, 2 GHz) (hereinafter referred to as the "low frequency band carrier"). The use of the low frequency band carrier allows the macro cell to assume a wide coverage easily, and operate in frequencies that allow connection to existing user terminals (Rel. 8 to 11). By this means, the macro cell can cover a wide range area as a cell where all user terminals stay connected at all times.

In the HetNet shown in FIG. 1, a plurality of small cells use a carrier of a relatively high frequency band such as, for example, 3.5 GHz (hereinafter referred to as the "high frequency band carrier"). The use of the high frequency band carrier allows the small cells to use a wide band, so that highly efficient data off-loading in a best-effort model becomes possible. Consequently, the small cells are placed in a localized manner as off-loading cells for the user terminals of heavy-traffic areas.

Also, in the HetNet shown in FIG. 1, the connection between the macro cell (macro base station) and the small cells (small base station) is established via a backhaul link. To be more specific, operation is assumed here where the macro base station and the small base stations coordinate via backhaul, and the macro base station assists the small base stations (operation in which the small base stations are dependent on the macro base station). In the operation in which a macro base station assists small base stations, the macro base station reports small base station detection information or control information to user terminals, the macro base station applies carrier aggregation (in case of inter-frequency) to add the small cells of small base stations or coordinated multi-point communication (in case of intra-frequency) to the terminals connected to the macro cell, and so on.

Also, between a plurality of small base stations, too, connection may be established via a backhaul link. The connection between the macro base station and the small base stations or the connection between the small base stations may be established with wire connection using optical fiber, non-optical fiber (X2 interface) and so on.

As shown in above FIG. 1A, in a structure to place many small cells in a macro cell, it is preferable to establish timing synchronization (hereinafter also referred to simply as "synchronization") between each small cell. By synchronizing each small cell mutually, it becomes possible to execute interference control between the small cells, or allow user terminals to discover small cells adequately.

As shown in FIG. 2A, when a plurality of small cells (in FIG. 2A, cell A and cell B) are arranged unevenly and in a high density, there is a threat that the interference between the cells increases. In this case, by synchronizing between the cells, it becomes possible to reduce interference by means of inter-cell interference control, coordinated communication and so on. In particular, when time division duplex (TDD) is used, if the downlink (DL) and the uplink (UL) are switched at the wrong time between neighboring cells, significant interference is produced between radio base stations or between user terminals, so that inter-cell synchronization is important.

As shown in FIG. 2B, a case is assumed here where a user terminal detects a small cell to connect with based on detection signals (discovery signals) that are transmitted from small cells. In this case, as long as the small cells are synchronized, a plurality of small cells can transmit detection signals all together in a short time interval, so that the user terminal has only to selectively perform the small cell detection operation in this time interval alone (time window). By this means, every user terminal can reduce the power consumption pertaining to the small cell detection operation and discover small cells efficiently.

As for the method of timing synchronization for small cells, (1) time synchronization by GPS, (2) synchronization by inter-cell communication through backhaul (for example, IEEE1588v2, etc.) and (3) synchronization by a radio interface may be possible. Synchronization by a radio interface refers to the method of establishing synchronization by allowing a small cell to receive DL signals that are transmitted from other cells, and detect timing. As for the DL signals, for example, reference signals (CRSs: Cell-specific Reference Signals), terminal-specific reference signals (DM-RSs: DeModulation RSs), channel information measurement reference signals (CSI-RSs: Channel State Information RSs), synchronization signals (P-SS: Primary Synchronization Signal, and S-SS: Secondary SS) and so on can be used.

The present inventors have found out that it is desirable to employ, as the method of synchronizing the small cells in the HetNet, synchronization by a radio interface, whereby synchronization is possible with the operator's own resource, without depending on external systems. This is because the synchronization of small cells by an external interface can realize receivers at low cost compared to GPS receivers, the synchronization system of IEEE1588v2 and so on. Furthermore, this is also because, by using synchronization by a radio interface with a conventional synchronization method complementarily, it becomes possible to establish timing synchronization between small cells in a wider range of environments.

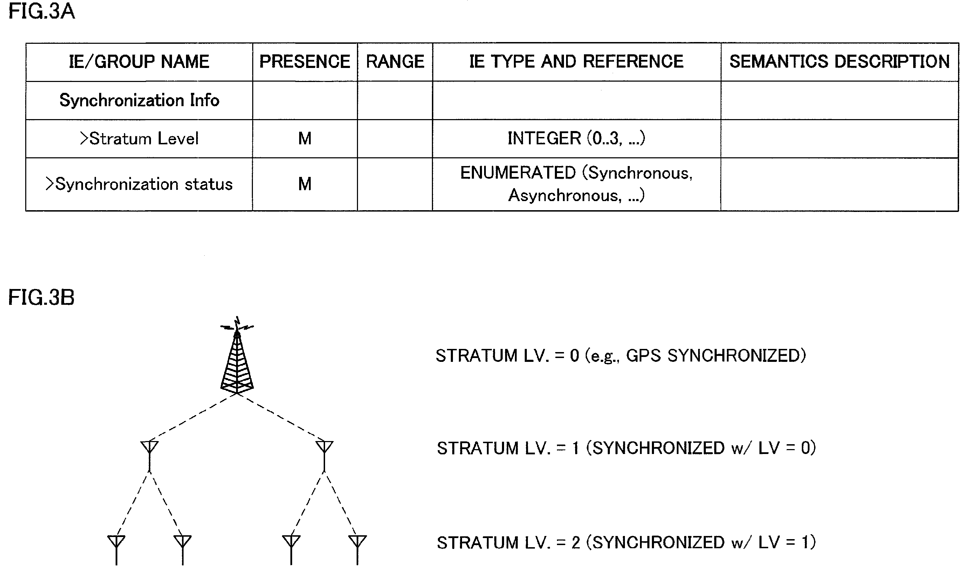

As shown in FIG. 3A, in LTE Rel. 9, backhaul signaling to realize radio synchronization is provided for TDD HeNBs (Home eNodeBs). To be more specific, exchange of synchronization information (time synchronization info) between radio base stations via backhaul signaling is made possible. The synchronization information includes each radio base station's synchronization status (which is either synchronous (or "sync") or asynchronous (or "async")), and the synchronization stratum level ("stratum level") if synchronization is established.

As shown in FIG. 3B, the synchronization stratum level (hereinafter also referred to as "stratum LV") shows the stratum level with respect to the radio base station (for example, macro cell) that is synchronized by GPS. In the example shown in FIG. 3B, if a macro base station that is GPS-synchronized has a stratum LV=0, small cells to establish synchronization by using DL signals from that radio base station have a stratum LV=1, which is one level below. Furthermore, small cells that are synchronized using DL signals from the small cells of the stratum LV=1 assume a stratum LV=2, which is one level below.

In this way, when synchronizing small cells by a radio interface, it is possible to learn, via backhaul signaling, the synchronization status and the synchronization stratum levels of other cells that are candidate synchronization targets. By this means, when establishing synchronization anew, each small base station can learn its synchronization stratum level based on synchronization information from other cells.

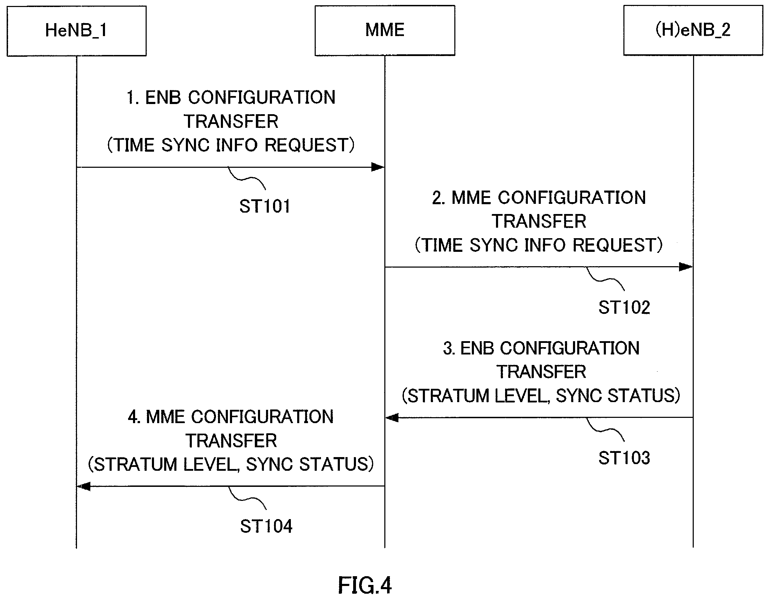

FIG. 4 is a sequence diagram to show an example of the operation of backhaul signaling to implement radio synchronization in conventional TDD HeNBs.

As shown in FIG. 4, in radio synchronization between a HeNB_1 and a (H)eNB_2, first, the HeNB_1 requests signaling of "time sync info" to the (H)eNB_2, via an MME (Mobility Management Entity) (ST101, ST102).

The (H)eNB_2 feeds back "time sync info" in response to the request (ST103). This "time sync info" includes the synchronization status (sync status) and the synchronize stratum level (stratum level) if synchronization is established.

The HeNB_1 acquires the stratum LV of the (H)eNB_2 and judges its stratum LV (ST104).

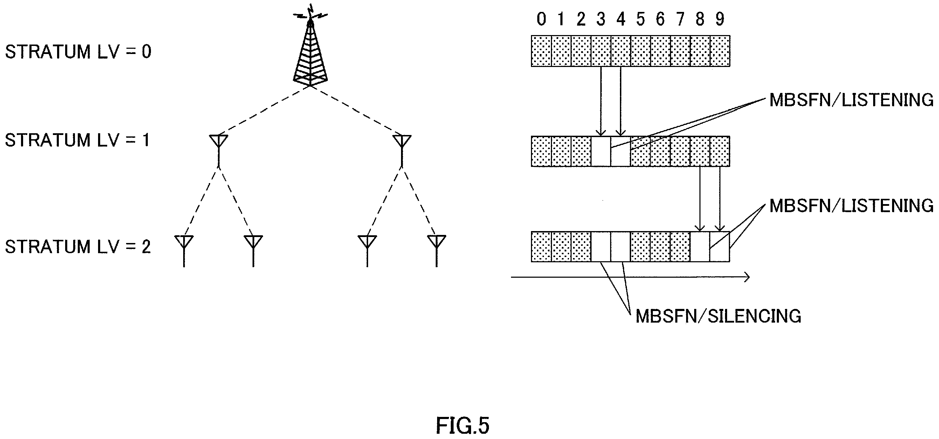

As shown in FIG. 5, in radio synchronization in conventional TDD HeNBs, an (H)eNB sets MBSFN (Multicast/Broadcast Single Frequency Network) subframes depending on its stratum LV. In the example shown in FIG. 5, the (H)eNBs of the stratum LV=1 establish synchronization by receiving cell-specific reference signals (CRSs) that are transmitted from the (H)eNB of the stratum LV=0, and therefore sets MBSFN subframes in #3 and #4. That is, the (H)eNBs of the stratum LV=1 are silent (silencing) so as to prevent interference against network listening in the (H)eNB of the higher stratum LV.

The (H)eNBs of the stratum LV=2 acquire synchronization by receiving cell-specific reference signals (CRSs) that are transmitted from the (H)eNBs of the stratum LV=1 and therefore sets MBSFN subframes in #8 and #9. At the same time, since the (H)eNBs of the stratum LV=1 are listening to the (H)eNB of the stratum LV=0, the (H)eNBs of the stratum LV=2 sets MBSFN subframes in #3 and #4 so as to prevent interference against the (H)eNBs of the stratum LV=1.

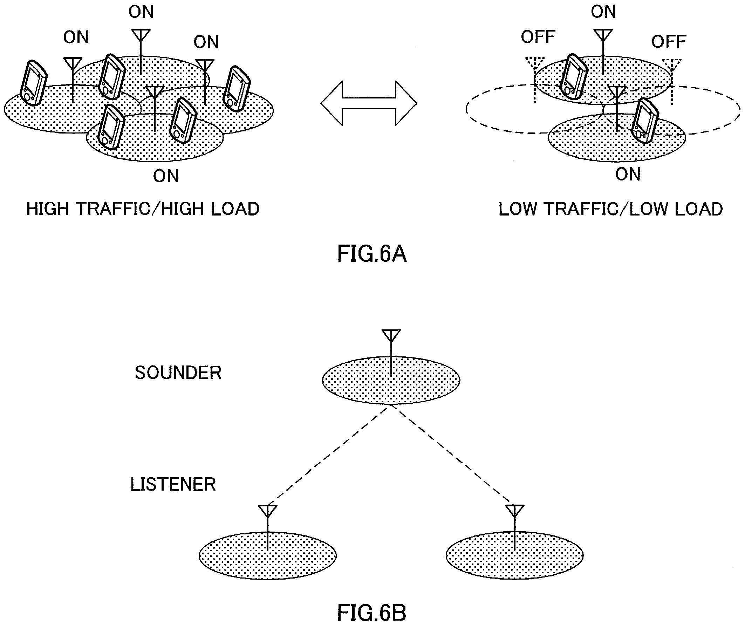

As shown in FIG. 6A, in Rel. 12, a study is in progress to switch small cells on and off in accordance with the fluctuations of traffic over time. By switching small cells on and off, it is possible to quit unnecessary DL transmissions, and, consequently, reduce interference and furthermore contribute to reduce network power consumption. Note the off-state of a small cell includes the state in which the small cell is completely turned off and the state in which the small cell is turned off intermittently.

However, when radio synchronization is used, the flexibility of turning on and off small cells is severely limited by the synchronize topology. As shown in FIG. 6B, a cell that has at least one cell as a listener and that itself is a sounder cannot be turned off easily. This is because, if a listener uses network listening while the cell being the sounder is turned off, the listener cannot detect timing correctly and see noise and interference peaks as timing, and, consequently, the listener becomes a completely out-of-sync small cell.

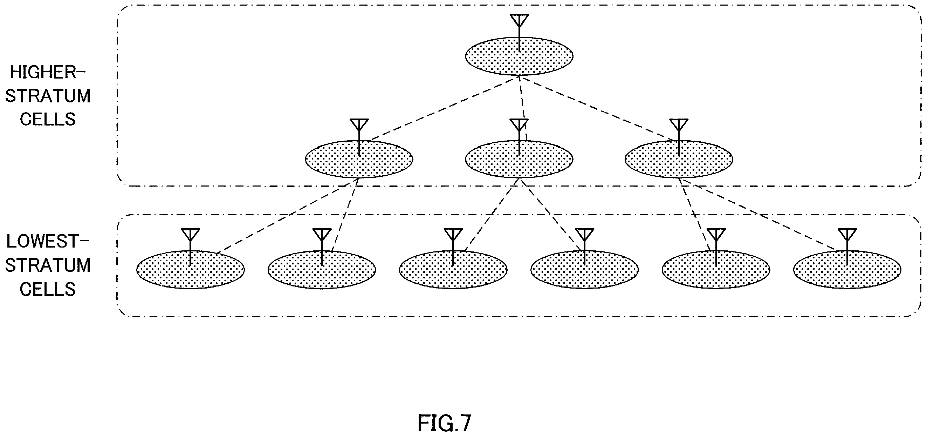

As shown in FIG. 7, the number of cells that cannot be turned off increases deeper in the stratum structure. In the example illustrated in FIG. 7, if small cells apart from the lowest stratum are turned off, there is a threat of causing an impact on the synchronization of other cells. To be more specific, when a small cell of a higher stratum is turned off, there is a threat of preventing a small cell of a lower stratum from using network listening and maintaining synchronization. On the other hand, turning off a small cell of the lowest stratum has no impact on other cells' synchronization.

Referring to the example shown in FIG. 7, although it is possible to switch on/off only the small cells of the lowest stratum, in this case, the number of small cells that can be turned off is limited, and, consequently, the interference reduction effect and the power consumption reduction effect are also limited.

Referring to the example illustrated in FIG. 1A, as use cases of radio synchronization between small cells, there are the case where a small cell belonging to a macro cell synchronizes with the parent macro cell, or the case where a small cell synchronizes with the cluster head in a cluster comprised of small cells. The cluster head refers to the only cell that has GPS in a cluster formed with small cells, or the cell with reference to which the small cells in the cluster establish synchronization.

In such use cases, only part of the small cells is unable to listen to the macro cell or the cluster head and acquires synchronization by listening to a lower stratum. That is to say, in actual operation, there are more small cells in higher strata and fewer lower small cells.

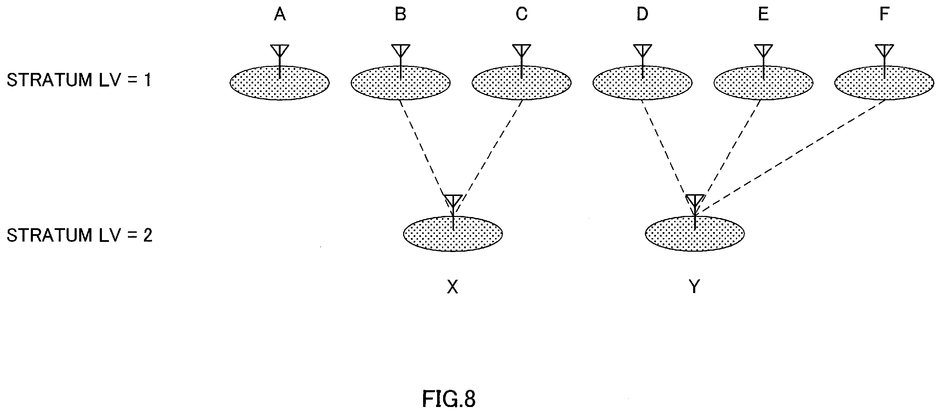

As shown in FIG. 8, if a small cell of a lower stratum (in FIG. 8, the stratum LV=2) can detect a plurality of small cells of a higher stratum (in FIG. 8, the stratum LV=1), the small cell of the lower stratum can acquire synchronization using a plurality of timings. In the example illustrated in FIG. 8, the small cell X of the lower stratum detects higher small cells B and C. Since the small cells B and C of the higher stratum are already synchronized, the synchronization of the small cell X may be achieved depending on the implementation of the small cell X, which is a listener.

Meanwhile, the small cells of the higher stratum have no way of knowing that a small cell of a lower stratum is listening from a plurality of higher small cells. In the example illustrated in FIG. 8, the small cell B of the higher stratum has no way of knowing that the lower small cell X is listening from the small cells B and C. In this case, the small cell B has difficulty turning itself off as long as there is a possibility that there is a listener (small cell X) whose synchronization relies solely upon the small cell B. In other words, the small cell B can turn itself off only if the small cell B knows that the listener (small cell X) does not rely upon the small cell B alone for synchronization, and acquires synchronization from other small cells as well.

Similarly, in the example illustrated in FIG. 8, a small cell Y of the lower stratum detects higher small cells D, E and F. However, the small cell D of the higher stratum has no way of knowing that the lower small cell Y is listening from the small cells D, E and F.

So, the present inventors have conceived of improving the flexibility of on/off control of small cells by reporting information about nearby radio-synchronized cells to small cells of higher strata.

### (First aspect)

A case will be described with a first aspect where a small cell of a lower stratum reports small cells to be the target to synchronize with, to other small cells including small cells of higher strata.

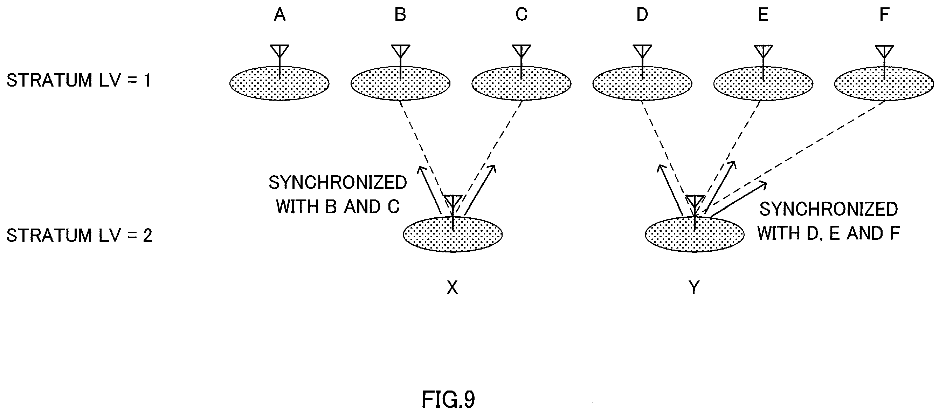

As shown in FIG. 9, a small cell of a lower stratum (in FIG. 9, the stratum LV=2), report the small cells to be the target to synchronize with, to other small cells including small cells of a higher stratum (in FIG. 9, the stratum LV=1). When a small cell of a lower stratum acquires synchronization between a plurality of small cells, the small cell reports a plurality of cells.

In the example illustrated in FIG. 9, a small cell X of the lower stratum synchronizes with higher small cells B and C. Here, the small cell X reports that "the small cells B and C are the target to synchronize with," to other cells including the small cells B and C. Similarly, a small cell Y of the lower stratum synchronizes with the small cells D, E and F of a higher stratum. So, the small cell Y reports that "the small cells D, E and F are the target to synchronize with," to other cells including the small cells D, E and F.

To be more specific, the report from the small cell X to other cells including the small cells B and C include the reference signal (cell-specific reference signal (CRS)) which the small cell X uses for synchronization (for listening), the terminal-specific reference signal (DM-RS), the channel information measurement reference signal (CSI-RS), sequences of synchronization signals (P-SS and S-SS), etc.), the cell ID that is associated with resources, the carrier frequency, the bandwidth and so on. The received power and the desired signal to interference plus noise power ratio (SINR: Signal to Interference plus Noise power Ratio) may be included as well. The small cell Y reports this information to other cells including the small cells D, E and F.

By sending report from a small cell of a lower stratum, a higher small cell can find out the situation of the small cell that establishes radio-synchronization thereunder, and, consequently, can turn itself off such that there is no impact on the synchronization of lower small cells. For example, the small cell Y that can synchronize with three cells of the stratum LV=1 can maintain synchronization insofar as at least one small cell is ON.

Furthermore, a small cell of a higher stratum can acquire information about neighbor cells which cannot be seen from the small cell, by means of report from lower small cells. Consequently, the higher small cell can carry out inter-cell interference control and load balancing adequately based on this information about neighbor cells.

Referring to the example illustrated in FIG. 9, even when the situation is assumed where the small cells B and C in the same stratum LV cannot see each other, by receiving the report that "the small cells B and C are the target to synchronize with" from the lower small cell X, the small cells B and C find out that they are close to each other. That is, the small cells B and C, otherwise unable to recognize their mutual proximity, can find out their proximity by virtue of report from the lower small cell X, so that it is possible to employ interference control to switch transmission patterns alternately as shown in FIG. 2A, load balancing to average out the number of users by appropriating the number of connecting user terminals with each other, and so on. Consequently, it is also possible to solve the so-called hidden terminal problem.

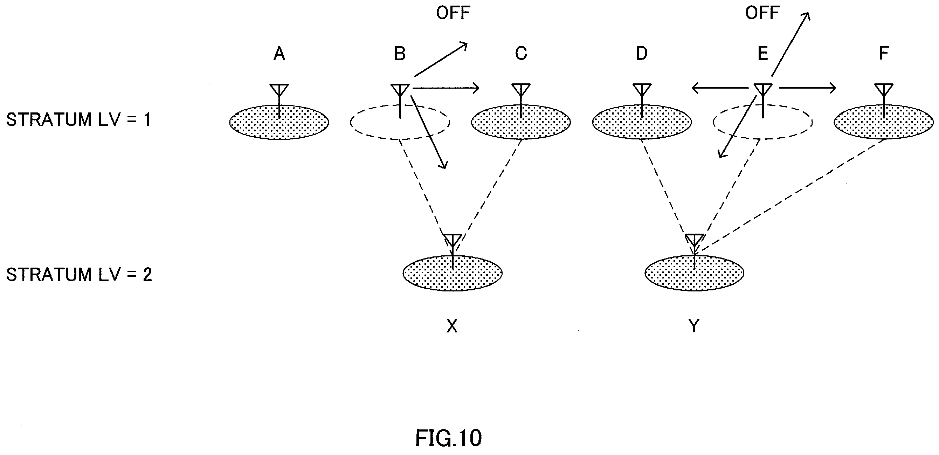

As shown in FIG. 10, when a small cell of a higher stratum turns itself off, the small cell sends a report to that effect to neighbor cells. The neighbor cells to be targets of the reporting include synchronized cells that are lower than the small cell, synchronized cells that are higher than the small cell, and neighbor cells that are reported from the lower synchronized cells.

In the example illustrated in FIG. 10, the small cell B reports that the small cell B is going to turn off, to neighbor cells including the small cell X, which is a synchronized cell lower than the small cell B, and the small cell C, which is a neighbor cell reported from the small cell X. The small cell E reports that the small cell E is going to turn off, to neighbor cells including the small cell Y, which is a synchronized cell lower than the small cell E, and the small cells D and F, which are neighbor cells reported from the small cell Y. This report may be sent via backhaul, or may be sent via radio.

To be more specific, the small cell B reports, to other cells including the small cells C and X, the reference signal (cell-specific reference signal (CRS)) which the small cell B turns off, the terminal-specific reference signal (DM-RS), the channel information measurement reference signal (CSI-RS), sequences of synchronization signals (P-SS, S-SS) etc.), the cell IDs associated with resources, the carrier frequency, the bandwidth and so on. If operation like discontinuous-transmission (DTX), in which "on" and "off" are switched periodically, is assumed, the "off" (or "on") time intervals may be included and reported as well. If DTX is used, by making the "off" time intervals clear, it is possible to maintain synchronization based on signals transmitted from an "off" small cell in a long periodicity. Also, the small cell E reports the information to other cells including the small cells D, F and Y.

By virtue of this report, each small cell, by switching to "off," can know the changing synchronization stratum. In the example illustrated in FIG. 10, when the small cell B reports to neighbor cells that the small cell B is going to turn off, the small cell C, which is a neighbor cell, notices that the small cell C cannot turn itself off. This is to prevent the small cell X of the lower stratum, synchronized with the small cells B and C, from losing synchronization.

An example of the operation according to the first aspect will be described. A small cell, once arranged, tries radio synchronization upon on/off control. In this case, like a user terminal UE, the small cell performs a cell search using synchronization signals (SSs) and reference signals (RSs), and detects the cells which the small cell can synchronize with. Also, the small cell synchronizes with small cells that are already synchronized, and determines its stratum LV. The small cell synchronizes with the cell of the highest stratum LV among the small cells that the small cells can listen to.

Furthermore, the small cell acquires and holds information about the small cells to listen to. The information to acquire may include, for example, in addition to the stratum LVs of the small cells to listen to, the cell IDs, operating frequencies, RSRP (Reference Signal Received Power) and so on. In this case, it is possible to employ the operations of cell search and measurements of a user terminal UE.

If the small cell receives a "time sync info request" from another cell, the small cell transmits, in addition to the stratum LV, the cell ID, operating frequency and RSRP of a synchronized small cell of a higher stratum, as "time sync info." Furthermore, upon on/off control, a neighbor cell, including a small cell of a higher stratum, requests "time sync info" to neighbor cells, including this cell, in advance.

A small cell of a higher stratum can turn itself off upon checking that the small cell itself is not a sounder for radio synchronization or that there is no listener whose synchronization relies solely upon the small cell.

The small cell may acquire synchronization using positioning reference signals (PRSs). The PRS has a long periodicity and high density, so that it is possible to reduce the overhead and achieve highly accurate radio synchronization. Also, when the PRS is used, since, like the CRS, the PRS can be transmitted in synchronization by changing the frequency and code and furthermore can be multiplexed at the same time, so that listeners can detect the PRSs of a plurality of cells at the same time.

The small cell may acquire synchronization by using demodulation reference signals (DMRSs: Demodulation Reference Signals). In this case, the sounder transmits the DMRS to listeners in predetermined resources. The DMRS resources may be indicated by the PDCCH (Physical Downlink Control Channel), may be indicated by the EPDCCH (Enhanced Physical Downlink Control Channel), or may be indicated by means of backhaul. When the DMRS is used, dynamic transmission is possible with resources where no data for user terminals UE is allocated, so that it is possible to achieve low overhead.

The small cell may acquire synchronization by using CSI-RSs (Channel State Information-Reference Signals). When the CSI-RS is used, it is possible to use a greater number of orthogonality than other RSs, so that, even in an environment where small cells are crowded, it is possible to achieve synchronization without suffering severe impact of interference from other cells.

The small cell may acquire synchronization by using discovery RSs, which user terminals UE use to discover small cells. The discovery RS is a reference signal which allows a large number of orthogonality like the CSI-RS, and which can be transmitted in a long periodicity and high density like the PRS. By using the discovery RS, it is possible to reduce the overhead, and achieve radio synchronization with high accuracy.

The reporting of synchronization information from listeners shown in FIG. 9 may be carried out by radio, without using backhaul. In this case, the small cells operate in user terminal UE mode, and transmit synchronization information by, for example, the PUSCH (Physical Uplink Shared Channel). The small cells operate in user terminal UE mode in a time cycle that is set in advance in backhaul. Alternatively, the small cells may operate in user terminal UE mode triggered by reception of backhaul signaling such as a "time sync info request."

The reporting of synchronization information by a radio interface may be sent by using the PUCCH (Physical Uplink Control Channel). The PUCCH involves little overhead, so that it is possible to report synchronization information without making user radio resources tight.

The reporting of synchronization information by means of a radio interface may be sent by appropriating part of the RACH (Random-Access Channel) operation. In LTE, a user terminal, after establishing downlink signal synchronization with the connecting cell, carries out the RACH operation to synchronize the uplink signal time. First, the user terminal transmits the PRACH (Physical Random Access Channel) in predetermined uplink channel resources, in accordance with downlink reception time. The base station calculates the difference between the time to receive the PRACH and the time to receive the desired uplink channel, and transmits a RAR (Random-Access Response), including time correction information, to the user terminal. The user terminal, upon receiving the RAR, corrects the reported difference in time, and transmits information about its own terminal, by means of the PUSCH.

Similar to the above user terminal, for example, the small cell X transmits the PRACH by using specific resources or sequences that are set in advance in association with the small cells B and C, so that the small cells B and C can know that the small cell X is synchronized. Furthermore, after the small cell X transmits the PRACH and corrects the time of uplink channel synchronization by means of the RAR, it may be possible to report synchronization information through the PUSCH.

By reporting synchronization information from listeners via radio, without using backhaul, it is possible to achieve an effect of reducing the overhead of backhaul signaling. This is because a small number of user terminals UE is located in each small cell, compared to backhaul which bundles many small cells, and the problem of radio link overhead holds little relevance. Furthermore, by reporting synchronization information from listeners via radio, an effect of allowing reporting with little delay compared to the case of using backhaul is achieved.

### (Second aspect)

A case will be described here with a second aspect where a user terminal UE that is connected with a small cell reports information about nearby radio-synchronized cells to its connecting cell.

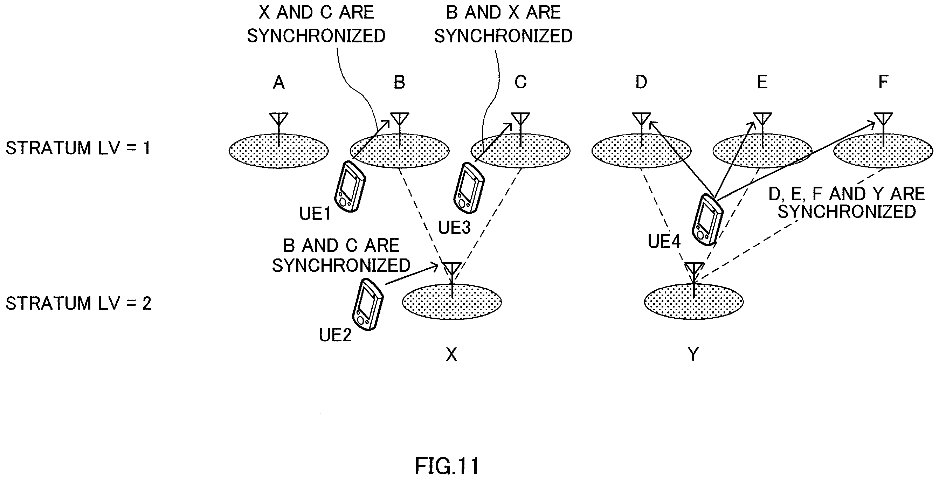

As shown in FIG. 11, a user terminal UE reports the information about nearby radio-synchronized cells to its connecting cell. In the example illustrated in FIG. 11, a user terminal UE1 reports that "the small cells X and C are synchronized" to the small cell B, which is the connecting cell. A user terminal UE2 reports that "the small cells B and C are synchronized," to the small cell X, which is the connecting cell. A user terminal UE3 reports that "the small cells B and X are synchronized," to the small cell C, which is the connecting cell. A user terminal UE4 reports that "the small cells D, E, F and Y are synchronized," to the small cells D, E and F, which are the connecting cells.

A small cell checks whether or not there is a nearby small cell that makes the small cell the source of synchronization, from the information about synchronized cells and "time sync info" reported from the user terminals UE. The small cell, if identifying no small cell that makes the small cell the source of synchronization, can turn itself off.

By reporting information about nearby radio-synchronized cells from user terminals UE, it is possible to exchange synchronization information with each other between cells, without increasing the load of backhaul. Furthermore, a small cell does not have to acquire synchronization if there is no synchronized small cell seen from the user terminals UE. Consequently, the small cell can determine whether or not the small cell can turn itself off, based on accurate information regarding the need for synchronization.

The small cell can estimate synchronization stratum changes around the small cell based on reports from the user terminals UE. By this means, the small cell can identify whether neighbor cells are "on" or "off."

A first aspect of the operation according to the second aspect encompasses a user terminal UE-based approach.

A user terminal UE carries out measurements with respect to the connecting cell and neighbor cells. The user terminal UE measures the times of neighbor cells from the synchronization signals, reference signals and so on, and detects the cell IDs. Also, the user terminal UE decodes the broadcast channel and identifies the measurement bandwidth of the detected cells. Also, the user terminal UE measures RSRP (Reference Signal Received Power) based on the reference signals. These are the same operation as conventional UE measurements in Rel. 8 to Rel. 11.

The user terminal UE includes neighbor cells' synchronization information in a measurement report and reports the result to the connecting cell. The trigger to report the measurement report may be an event, a command from a base station, a timer and so on. Among the neighbor cells detected, the user terminal UE reports the cell IDs of cells where, for example, the difference in the time to receive the RS from the connecting cell is X[µs] (for example, X=4) or less, as synchronize cell information.

By means of the above operation, it is possible to appropriate the conventional mechanism for measurements and enable user terminals UE to report synchronize cell information. Also, connecting cells that receive reports from the user terminals UE are able to acquire more accurate synchronization information including RSRP and so on.

A second aspect of the operation according to the second aspect encompasses a network-based approach.

The network reports the lists of cells that may be synchronized, to the user terminals UE in advance. For example, the macro cell may report the list of small cells in its coverage. Alternatively, it may be possible to appropriate the "neighboring cell list," which is provided in the current specifications.

A user terminal UE tries to detect the neighbor cells in the reported list, in the same time as that of the connecting cell (that is, a time within the cyclic prefix (CP)), based on an event, a command from a base station, a timer and so on. The user terminal UE carries out correlation detection in the patterns of candidate SSs and RSs, and reports a cell ID list of the cells where peaks are found, to its connecting cell. In this case, the user terminal UE does not have to identify the broadcast channel and the bandwidth, as in measurements.

The RS bandwidth may be detected by (1) carrying out correlation detection assuming the same bandwidth as that of the connecting cell, (2) carrying out correlation detection assuming the minimum bandwidth that may be used, and (3) carrying out correlation detection assuming the bandwidth indicated from the network.

In the event of above (1), the cells primarily operate in the same bandwidth, so that this proves effective in most cases. In the event of using the same bandwidth, it is possible to carry out correlation detection more accurately than in above (2).

In the event of above (2), even if the bandwidth varies between the cells, it is still possible to carry out correlation detection accurately. In the event of above (3), it is possible to carry out detection operation in a proper bandwidth per cell.

The time the user terminal U tries the detection needs not be the same time as that of the connecting cell, and may use resources which are defined by applying a predetermined offset. The amount of offset in this case may be a value indicated from the base stations.

Operation like the above places less load on user terminals UE than measurements, and therefore can reduce the power consumption of the user terminals UE.

The reporting of synchronization information from user terminals UE may be sent during the RACH operation. For example, after a user terminal UE transmits the PRACH in predetermined uplink channel resources in accordance with downlink reception time and receives a RAR transmitted from a base station, the user terminal corrects the difference in time reported in the PAR and transmits information about its own terminal through the PUSCH, by adding synchronization information of neighbor cells.

In this way, it is possible to acquire synchronization information through faster and less-loaded terminal processing operation, than a measurement report that can be transmitted only after RACH operation is complete.

### (Structure of Radio Communication System)

Now, a structure of a radio communication system according to the present embodiment will be described. In this radio communication system, the radio communication methods according to the first aspect and the second aspect are employed.

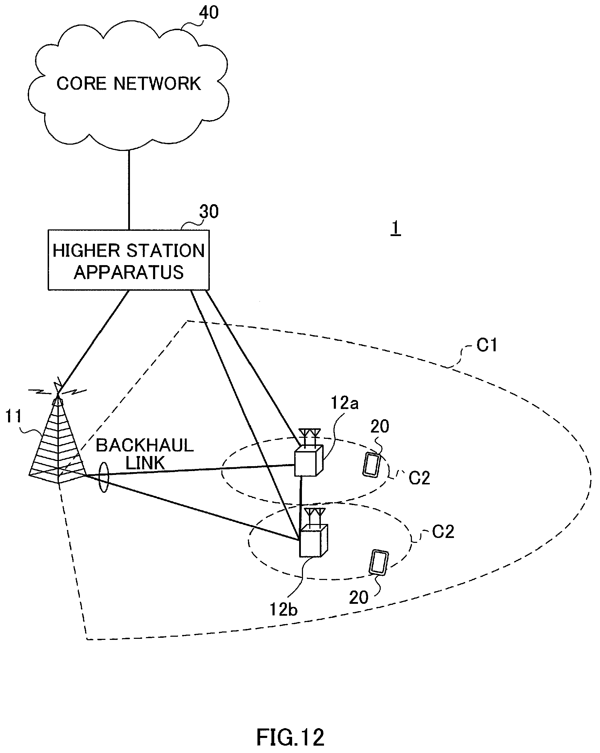

FIG. 12 is a schematic configuration diagram of a radio communication system according to the present embodiment. As shown in FIG. 12, the radio communication system 1 includes a macro base station 11, which forms a macro cell C1, and small base stations 12a and 12b, which are placed in the macro cell C1 and which form small cells C2 that are narrower than the macro cell C1. The user terminals 20 are structured to be capable of carrying out radio communication with the macro base station 11 and at least one of the small base stations 12a and 12b (hereinafter collectively referred to as "small base stations 12"). Note that the number of the macro base station 11 and the small base stations 12 are by no means limited to the number illustrated in FIG. 12.

In the macro cell C1 and the small cells C2, the same frequency band may be used, or different frequency bands may be used. Also, the macro base station 11 and each small base station 12 are connected with each other via an inter-base station interface (for example, optical fiber, X2 interface, etc.). The macro base station 11 and the small base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB (eNB)," a "radio base station," a "transmission point" and so on. The small base stations 12 are radio base stations that have local coverages, and may be referred to as "RRHs (Remote Radio Heads)," "pico base stations," "femto base stations," "HeNBs (Home eNodeBs)," "transmission points," "eNodeBs (eNBs)" and so on. The user terminals 20 are terminals to support various communication schemes such as LTE and LTE-A, and may not only be mobile communication terminals, but may also include fixed communication terminals as well.

The radio communication system 1 assumes cases where the networks that are formed per macro cell are asynchronous (asynchronous operation). Also, in the radio communication system 1, as radio access schemes, OFDMA (Orthogonal Frequency Division Multiple Access) is applied to the downlink, and SC-FDMA (Single-Carrier Frequency Division Multiple Access) is applied to the uplink.

In the radio communication system 1, a downlink shared channel (PDSCH: Physical Downlink Shared Channel), which is used by each user terminal 20 on a shared basis, a downlink control channel (PDCCH: Physical Downlink Control Channel), an EPDCCH (Enhanced Physical Downlink Control Channel), a PCFICH (Physical Control Format Indicator Channel), a PHICH (Physical Hybrid-ARQ Indicator Channel), a broadcast channel (PBCH: Physical Broadcast Channel) and so on are used as downlink communication channels. User data and higher layer control information are transmitted by the PUSCH. Downlink control information (DCI) is transmitted by the PDCCH and the EPDCCH.

Also, in the radio communication system 1, an uplink shared channel (PUSCH: Physical Uplink Shared Channel), which is used by each user terminal 20 on a shared basis, an uplink control channel (PUCCH: Physical Uplink Control Channel) and so on are used as uplink communication channels. User data and higher layer control information are transmitted by the PUSCH. Also, by means of the PUCCH, downlink radio quality information (CQI: Channel Quality Indicator), delivery acknowledgement information (ACKs/NACKs) and so on are transmitted.

Hereinafter, the macro base station 11 and the small base stations 12 will be collectively referred to as "radio base station 10," unless distinction needs to be drawn otherwise.

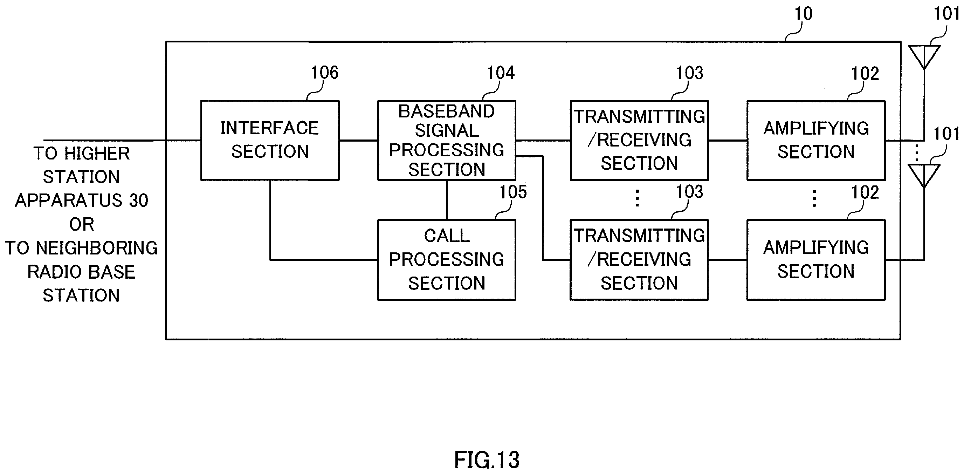

FIG. 13 is a diagram to show an overall structure of a radio base station 10 according to the present embodiment. The radio base station 10 has a plurality of transmitting/receiving antennas 101 for MIMO transmission, amplifying sections 102, transmitting/receiving sections 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of the user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is transferred to each transmitting/receiving section 103. Furthermore, downlink control signals are also subjected to transmission processes such as channel coding and an inverse fast Fourier transform, and transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input uplink signals is subjected to an FFT process, an IDFT process, error correction decoding, a MAC retransmission control receiving process, and RLC layer and PDCP layer receiving processes, and transferred to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, X2 interface, etc.). Alternatively, the interface section 106 transmits and receives signals to and from the higher station apparatus 30 via a predetermined interface.

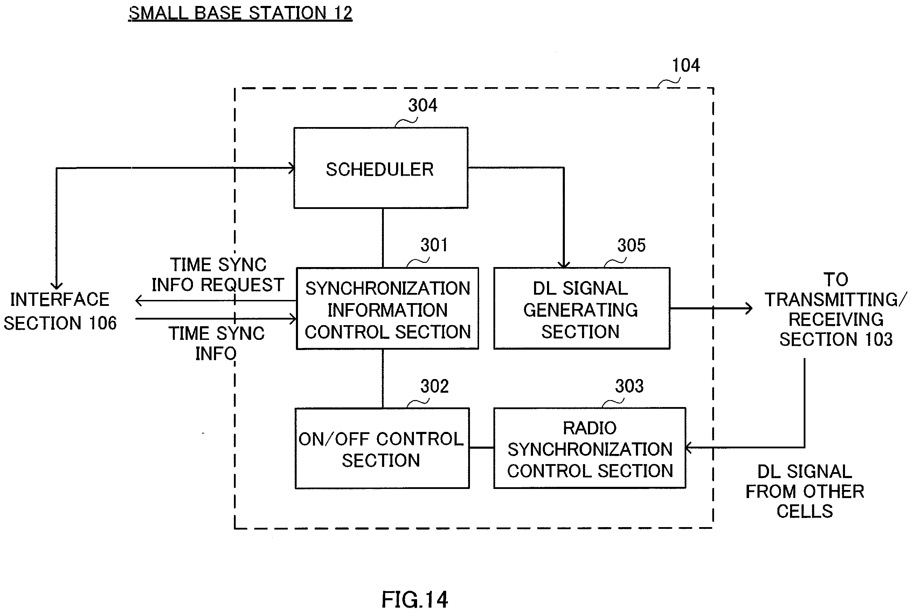

FIG. 14 is a diagram to show a functional structure of a radio base station 12 (small base station) according to the present embodiment. Note that the following functional structure is formed with the baseband signal processing section 104 provided in the radio base station 12 and so on.

As shown in the FIG. 14, the radio base station 12 has a synchronization information control section 301, an on/off control section 302, a radio synchronization control section 303, a scheduler 304 and a DL signal generating section 305.

The synchronization information control section 301 transmits and receives signals to and from the radio base stations of other cells (backhaul signaling) via the interface section 106. To be more specific, the synchronization information control section 301 transmits a synchronization information request (time sync info request) to the radio base stations where radio synchronization is judged to be possible, via backhaul. Also, the synchronization information control section 301 receives synchronization information that is fed back from the macro base stations and/or the small base stations having received the synchronization information request. The synchronization information includes, in addition to the synchronization status and the synchronization stratum levels (stratum LVs), the cell IDs, operating frequencies, and RSRP of synchronizing cells of higher strata. Also, the synchronization information control section 301 can identify the radio base stations where radio synchronization is possible, by way of a search and measurements of neighbor cells.

The on/off control section 302 identifies the status of synchronization with a cell belonging to a lower stratum than the own cell, based on the synchronization information of other cells received from the radio base stations of the other cells, and carries out on/off control for the own cell. For example, when the radio base station 10 is itself a sounder for radio synchronization and there is a cell (listener) that belongs to a lower stratum and is synchronized with the own cell alone, it is not possible to turn off the own cell because turning off the own cell will have an impact on the listener. On the other hand, even when the radio base station 10 is the sounder in radio synchronization, if there is no cell (listener) that belongs to a lower stratum and that is synchronized with the own cell alone, the own cell can be turned off.

If the on/off control section 302 determines to turn off the own cell, the on/off control section 302 sends a report to the effect that the own cell is going to turn off, to synchronized cells that belong to lower strata than the own cell, synchronized cells that belong to higher strata than the own cell, and neighbor cells that are reported from the synchronized cells belonging to lower strata, via the interface section 106.

The radio synchronization control section 303 acquires timing synchronization by using DL signals transmitted from the radio base stations of the synchronization target.

The scheduler 304 allocates radio resources for DL signals to transmit to the user terminal 20 (scheduling). For example, when detection signals (discovery signals) are transmitted to the user terminal 20, the detection signals are controlled to be transmitted in a predetermined period. Also, when the small base station 12 is synchronized with another small base station, the detection signals are controlled to be transmitted from a plurality of small base stations simultaneously in a predetermined period.

The DL signal generating section 305 generates DL signals based on commands from the scheduler 304. For example, the DL signal generating section 305 generates control signals, data signals, reference signals and so on. Also, the DL signal generating section 305 generates detection signals (discovery signals) for allowing the user terminal 20 to discover the small base station. The signals generated in the DL signal generating section 305 are transmitted to the user terminal 20 and the radio base stations of other cells via the transmitting/receiving sections 103.

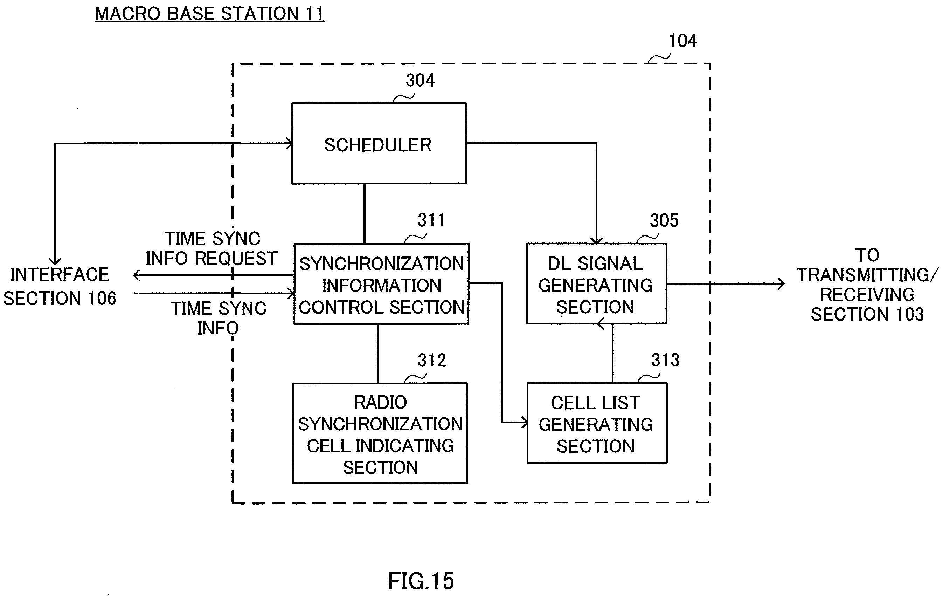

FIG. 15 is a diagram to show a functional structure of a radio base station 11 (macro base station) according to the present embodiment. Note that the following functional structure is formed with the baseband signal processing section 104 provided in the radio base station 11 and so on.

As shown in the FIG. 15, the radio base station 11 has a synchronization information control section 311, a radio synchronization cell indicating section 312, a cell list generating section 313, a scheduler 304 and a DL signal generating section 305.

The synchronization information control section 311 transmits and receives signals to and from the small base stations 12 (backhaul signaling) via the interface section 106. To be more specific, the synchronization information control section 311 transmits a synchronization information request (time sync info request) to the radio base stations where radio synchronization is judged to be possible, via backhaul, and receives synchronization information that is fed back from the serving small base stations. The synchronization information includes, in addition to the synchronization status and the synchronize stratum levels (stratum LVs), the cell IDs, operating frequencies and RSRP of the synchronized cells of higher strata. The synchronization information control section 311 identifies the synchronization target of the serving small base stations (whether they are synchronous or asynchronous with respect to the macro base station) based on the synchronization information that is acquired. In this way, by allowing the macro base station to learn the synchronization target of the serving small base stations, the scheduler 304 can adequately change and control the operating method between synchronous small base stations and asynchronous small base stations.

Also, the radio synchronization cell indicating section 312 indicates the synchronization target to the serving small base stations 12.

The cell list generating section 313 generates the list of small cells in the coverage of the macro cell formed by this macro base station 11. The list generated in the cell list generating section 313 is transmitted to the user terminal 20 by using higher layer signaling (for example, RRC signaling, broadcast signal, etc.) and downlink control information.

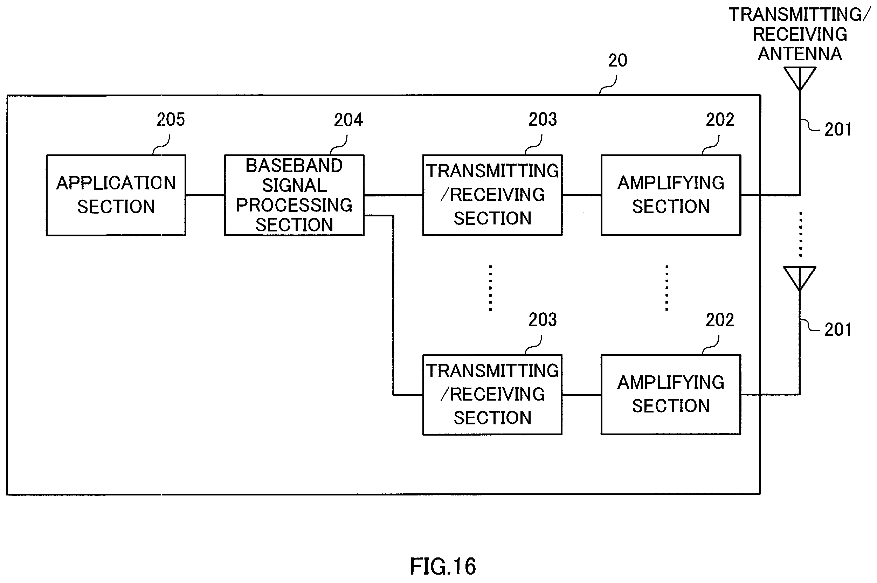

FIG. 16 is a diagram to show an overall structure of a user terminal 20 according to the present embodiment. The user terminal 20 has a plurality of transmitting/receiving antennas 201 for MIMO transmission, amplifying sections 202, transmitting/receiving sections (receiving sections) 203, a baseband signal processing section 204 and an application section 205.

As for downlink data, radio frequency signals that are received in a plurality of transmitting/receiving antennas 201 are each amplified in the amplifying sections 202, and subjected to frequency conversion and converted into baseband signals in the transmitting/receiving section 203. These baseband signals are subjected to an FFT process, error correction decoding, a retransmission control receiving process and so on, in the baseband signal processing section 204. In this downlink data, downlink user data is transferred to the application section 205. The application section 205 performs processes related to higher layers above the physical layer and the MAC layer, and so on. Also, in the downlink data, broadcast information is also transferred to the application section 205.

Meanwhile, uplink user data is input from the application section 205 into the baseband signal processing section 204. The baseband signal processing section 204 performs a retransmission control (H-ARQ (Hybrid ARQ)) transmission process, channel coding, pre-coding, a DFT process, an IFFT process and so on, and transfers the result to each transmitting/receiving section 203. The baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

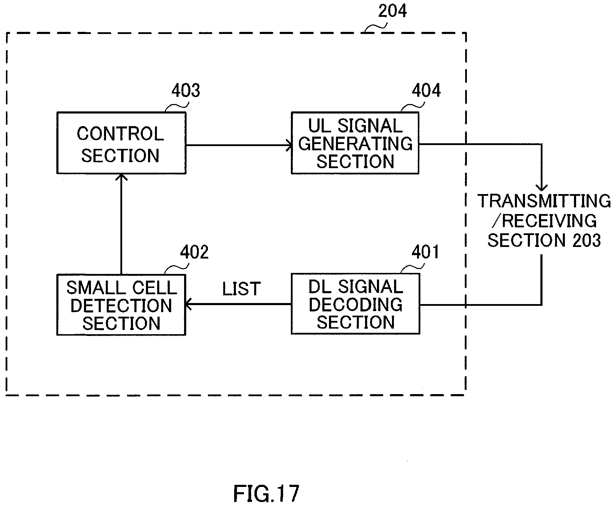

FIG. 17 is a diagram to show a principle functional structure of the baseband signal processing section 204 provided in a user terminal 20. As shown in FIG. 17, the baseband signal processing section 204 provided in the user terminal 20 is comprised at least of a DL signal decoding section 401, a small cell detection section 402, a control section 403 and a UL signal generating section 404.

The DL signal decoding section 401 decodes the DL signals transmitted from the radio base stations 11 and 12. For example, when information (list) about small base stations is transmitted from the macro base station 11, the information of the list is output to the small cell detection section 402.

The small cell detection section 402 detects the connecting small base station based on the detection signals (discovery signals) transmitted from the small base stations 12. When a plurality of small base stations are detected, a predetermined small base station is selected base on received quality and so on. Also, when the information (list) about small base stations transmitted from the macro base station 11 is received, a small base station is detected based on this list.

The control section 403 controls the allocation of uplink control signals (feedback signals) and uplink data signals to radio resources based on downlink control signals (UL grant) transmitted from the radio base stations. The UL signal generating section 404 generates uplink control signals (feedback signals such as delivery acknowledgement signals, channel state information (CSI) and so on) based on commands from the control section 403. Also, the UL signal generating section 404 generates uplink data signals based on commands from the control section 403.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way. Also, the examples described above may be combined and implemented as appropriate.

The disclosure of Japanese Patent Application No. 2013-153660, filed on July 24, 2013, including the specification, drawings and abstract, is incorporated herein by reference in its entirety.

## Claims

1. A radio base station that establishes radio synchronization by using a downlink signal transmitted from a radio base station of another cell, the radio base station comprising:
a synchronization information control section that, via an inter-base station interface, reports a synchronization information request to the radio base station of the other cell and also acquires synchronization information reported from the radio base station of the other cell; and
an on/off control section that, based on the synchronization information acquired, determines the status of synchronization with a cell that belongs to a lower stratum than an own cell, and executes on/off control for the own cell,
wherein the synchronization information which the synchronization information control section acquires from the radio base station of the other cell includes information representing a synchronization status and a synchronization stratum level of the radio base station of the other cell.

2. The radio base station according to claim 1, wherein the on/off control section turns off the own cell when there is no cell that belongs to a lower stratum and that synchronizes with the own cell alone.

3. The radio base station according to claim 1 or claim 2, wherein, when turning off the own cell, the on/off control section reports that the own cell is going to turn off, to a synchronized cell belonging to a lower stratum than the own cell, a synchronized cell belonging to a higher stratum than the own cell and a neighbor cell that is reported from the synchronized cell belonging to the lower stratum.

4. The radio base station according to claim 1, wherein the synchronization information reported from the radio base station of the other cell is reported by using radio.

5. The radio base station according to claim 1, wherein a positioning reference signal (PRS) is used in the radio synchronization.

6. The radio base station according to claim 1, wherein a demodulation reference signal (DMRS) is used in the radio synchronization.

7. A radio base station that establishes radio synchronization by using a downlink signal transmitted from a radio base station of another cell, the radio base station comprising:
a synchronization information control section that acquires synchronization information reported from a user terminal; and
an on/off control section that, based on the synchronization information acquired, judges the status of synchronization with a cell that belongs to a lower stratum than an own cell, and executes on/off control for the own cell,
wherein the synchronization information which the synchronization information control section acquires from the user terminal includes information representing a synchronization status and a synchronization stratum level of a radio base station of a neighbor cell.

8. The radio base station according to claim 7, wherein the synchronization information reported from the user terminal is included in a measurement report.

9. A user terminal that can receive downlink signals from a macro base station and a plurality of small base stations that serve under the macro base station, the user terminal comprising:
a receiving section that receives a list to define information related to the small base stations serving under the macro base station, from the macro base station;
a detection section that tries to detect the small base stations provided in the list at a time within a cyclic prefix; and
a transmission section that reports a cell ID list of cells of the small stations detected in the detection section, to a connecting cell.

10. A radio communication method in a radio base station that establishes radio synchronization by using a downlink signal from a radio base station of another cell, the method comprising the steps of:
via an inter-base station interface, reporting a synchronization information request to the radio base station of the other cell and also acquiring synchronization information reported from the radio base station of the other cell; and
based on the synchronization information acquired, determining the status of synchronization with a cell that belongs to a lower stratum than an own cell, and executing on/off control for the own cell,
wherein the synchronization information acquired from the radio base station of the other cell includes information representing a synchronization status and a synchronization stratum level of the radio base station of the other cell.
